# EUROPEAN PATENT APPLICATION

(11) **EP 4 495 055 A1**
(43) Date of publication of application: **22.01.2025**
(21) Application number: 23186517.1
(22) Date of filing: 19.07.2023
(51) Int. Cl.: C01B 3/04, B01J 19/08, C01B 13/02

(54) **SYSTEM AND METHOD FOR TREATING LIQUID BY SPLITTING MOLECULES OF THE LIQUID INTO SMALLER PARTS**

(71) Applicant: Licitar, Antonijo, 10000 Zagreb (HR); Sima, Marc, 07340 Alaro (ES)
(72) Inventor: Licitar, Antonijo, 10000 Zagreb (HR); Sima, Marc, 07340 Alaro (ES)
(74) Representative: Bardehle Pagenberg Partnerschaft mbB Patentanwälte Rechtsanwälte

(57) **Abstract**

An apparatus for treating one or more liquids by splitting molecules of the liquids into smaller parts is described. The apparatus comprises one or more treatment units, wherein each treatment unit comprises two first plates, which are arranged essentially parallel to each other, wherein each plate of the two first plates comprises at least one hole and wherein the two first plates are configured to receive an electric current. The apparatus further comprises at least one second plate, which is arranged between the two first plates, wherein each plate of the at least one second plate comprises at least one hole. The holes of the two first plates and the at least one hole of the at least one second plate are fluidly connected. Further, a corresponding system and method are described.

## Description

The present patent application relates to systems and methods for treating liquids. In particular, the present patent application relates to splitting molecules of a liquid into smaller parts. Thereby, the current patent application, for example, provides a system and method for generation of hydrogen and oxygen gases from water or mixtures of water with other liquids (e.g. an alcohol such as methanol or ethanol).

In today's industry, various applications for gases exist. Some of the gases that are widely used in the industry are oxygen and hydrogen. While oxygen and hydrogen generally are components of liquids, such as water or mixtures of waters with other liquids (e.g. alcohols), obtaining these components from the liquid is cumbersome. The current application provides a novel concept for obtaining hydrogen and oxygen syngas from liquids by splitting molecules of the liquid.

While various applications of the disclosed concept are possible, one particular example is the application for conditioning liquids for use in internal combustion engines. Power units on the basis of internal combustion engines are a main contributor to carbon emissions that accelerate global warming and thereby impact the environment and the air quality, because they combust hydrocarbon fuels which causes emissions such as particulate matter (PM), hydrocarbon (HC), carbon dioxides (CO₂), carbon monoxides (CO), and nitrogen oxides (NOX).

Replacing hydrocarbon fuels with alternatives like biofuels, synthetic fuels or even burning hydrogen gas in combustion engines each have drawbacks like limited availability, high costs, difficult storage or handling and in the end often require costly and elaborate modifications to the combustion engine itself.

Accordingly, while the search for sustainable and green power units and alternative fuels is ongoing, well-established internal combustion engines that run on hydrocarbon fuels will remain to be irreplaceable in a lot of applications - one of these applications being marine two-stroke internal combustion engines.

In order to achieve a short-term or medium-term reduction of carbon gas emissions in established internal combustion engines, it is important to improve the combustion of hydrocarbon fuels in internal combustion engines.

One way of improving the combustion will be adding hydrogen and/or oxygen gas to the hydrocarbon fuel. Here, the system and method according to the current patent application will provide for generating hydrogen or oxygen gas from liquid. Moreover, the system and method according to the current patent application aims at obtaining hydrogen and oxygen gas from widely available liquids, such as (fresh) water, waste water, sea water or any mixture of water and another substance, such as an alcohol, a hydrocarbon fuel or an additive.

It has however to be understood that also in the here described embodiments the hydrogen and/or oxygen gas are used as an addition to the hydrocarbon fuel in the combustion engines, the produced hydrogen may also alone be used in respective engines or other application. In this case the cumbersome storing facilities, like big pressurized gas tanks, become obsolete, since the hydrogen can directly be produced from liquids.

The abovementioned need for improving the generation of syngas by splitting molecules of a liquid into smaller parts is overcome by an apparatus according to the current invention. The apparatus comprises one or more treatment units.

Each treatment unit of the one or more treatment units comprises two first plates and at least one second plate.

The two first plates are arranged essentially parallel to each other and each plate of the two first plates comprises at least one hole. Further, the two first plates are configured to receive an electric current. The electric current may be provided by an electric current generator or in other words, the first plates may be configured to be connected to an electric current generator. The electric current may be an alternating current or may be a direct current. Preferably, the electric current is a pulsating current. The first plates may be made of a metal. Preferably, the first plates may be made of stainless steel or another non-magnetic, but conductive metal. In some examples, the first plates may be made of fiber material, such as carbon fibers, or may be made of nano-coated material, including conductive and non-conductive materials, such as glass.

The at least one second plate is arranged between the two first plates and each second plate comprises at least one hole. Because of their arrangement, the two first plates may be referred to as end plates of the treatment unit, whereas the at least one second plate may be referred to as one or more middle plates.

Further, the holes of the two first plates and the at least one hole of the at least one second plate are fluidly connected. Preferably, the two first plates and the at least one second plate are arranged essentially parallel to each other. Further, the two first plates and the at least one second plate are spaced apart from one another, thereby creating clearances between adjacent plates. These clearances may be fluidly connected by the holes in the first and second plates. This way the clearances and the holes may form one or more flow paths that extend between the plates. In some preferred embodiments, for adjacent plates, the holes may be located at opposing ends of the plates, thereby increasing the length of the flow path that is formed between the plates. The one or more flow paths that are formed between the plates and the holes may comprise turns in order to increase the length of the flow path.

According to the current invention, one or more liquids will stream through the fluidly connected holes in the first and second plates. By applying an electrical current to the two first plates, the liquid will be polarized. Usually, the molecules of liquids have portions that are positively charged and other portions that are negatively charged, while the molecule as such is not charged. In case of, for example, water (H₂O), the hydrogen atoms (H) in the molecule get positively charged, while the oxygen atom (O) gets negatively charged because the electronegativity of the oxygen atom is higher than the electronegativity of the hydrogen atoms. Since the water molecule is angled, each water molecule forms a dipole. When water encounters an external electric field - like the one created when an electric current is applied to the first plates - the water molecule dipoles will align according to the external field. Thereby, the water gets polarized. This is similar for other liquids that comprise polarizable molecules such as dipole molecules.

Further, the at least one second plate experiences the electric field generated by the polarization of the one or more liquids and/or the electric field generated by the two first plates. This leads to a polarization of the second pate, thereby maintaining the polarization of the one or more liquids while the one or more liquids flow through the at least one hole in the at least one second plate.

Preferably, a pulsating current is applied to the first plates. The pulsating current has an amplitude that changes according to a frequency, thereby creating resonance in the liquid molecules. Because of the resonance, energy is introduced into the molecules that causes some of the bonds that hold the atoms of the molecules together to break. When at least some of the bonds are breaking, the molecules of the liquid will split into smaller parts. In case of water, the H₂O molecules could split into hydrogen and oxygen, which may form H₂ and O₂ molecules dissolved in the water.

The resonance that is generated by the electric current applied to the first plates may depend on the geometric properties of the apparatus, its size, the arrangement of the plates, and/or the materials used. The frequency at which the apparatus resonates is preferably adjusted to match with the frequency that resonates with the bonds of the molecules that are to be split. In some examples, it is preferred to analyze the resonance properties of the apparatus for treating liquids during an initial adjusting step. Such analysis may be performed by ease of an oscilloscope and may be continued during operation of the apparatus, because the composition of the liquid treated with the apparatus may influence the resonance frequency. For example, if sea water or waste water are treated, the composition of the liquid may vary, thereby leading to a need for adjusting the applied current and/or the frequency with which the current may pulsate.

Accordingly, the disclosed apparatus treats liquids by splitting molecules of the liquids into smaller parts. In case that water or a mixture of water and other substances is used, hydrogen and oxygen gases are generated from the water or the mixture. These hydrogen and oxygen gases may be collected (e.g. separated from the liquid/mixture) and may be used in internal combustion engines or other applications as has been mentioned above.

In a preferred embodiment, the apparatus comprises two or more of the abovementioned treatment units. These two or more treatment units may preferably be arranged in a stacked manner, i.e. arranged adjacent to one another. Thereby, holes in the plates of neighboring treatment units preferably are fluidly connected to one another. As mentioned above, the plates of each treatment unit may be spaced apart and form clearances, wherein the clearances and the holes in the plates form one or more flow paths. In case of two or more treatment units, the flow paths of adjacent treatment units may be connected and form a common flow path.

Generally, a flow path formed between plates of one or more treatment units may form a linear flow path in the sense that the flow path only forms a single branch. While the single branch may comprise turns and twists that increase the length of the flow path and thereby the time during which the liquid flowing through the flow path is treated by the treatment unit, the single branch does not comprise any taps or branch-offs. In other embodiments, the flow path formed between plates of one or more treatment units may form a branching flow path that comprises multiple branches. This may be of particular use in case that one plate of the treatment units comprises more than one hole, because then the branches of the flow path may connect these different holes with each other. In other embodiments, multiple flow paths may be formed between the plates of the one or more treatment units. These multiple flow paths may form intersections between at least some of the branches or may be separated without forming any intersections.

In some preferred embodiments, in which the apparatus comprises two or more treatment units, one of the two first plates of a first treatment unit may represent one of the two first plates of a second treatment unit that is an adjacent neighbor of the first treatment unit in the stack of two or more treatment units. In other words, neighboring treatment units may share a common first plate. Considering the abovementioned notation according to which the first plates may be referred to as end plates of the treatment units, two neighboring treatment units may comprise a common end plate.

The abovementioned need is also overcome by a system for treating one or more liquids according to the current invention. The system comprises a resonance frequency splitting chamber, a liquid-gas separator, a polarizer and an outlet.

The resonance frequency splitting chamber may correspond to any of the embodiments of the abovementioned apparatus for treating liquid according to the invention.

The liquid-gas separator comprises two outputs, wherein a first output may be configured to provide liquid and a second output may provide gas that is separated from the liquid.

The polarizer may improve the polarization of the one or more liquids and may thereby enhance the further processing of the one or more liquids. One example of a polarizer that is suitable for being used in a system according to the invention, is a Halbach array - however other polarizers may be used without departing from the scope of the current application. As the person skilled in the art will appreciate, a Halbach array comprises a specific arrangement of permanent magnets, which causes increased magnetic flux on one side of the arrangement, along with highly decreased magnetic flux on the opposite side of the arrangement. According to some embodiments of the invention, the Halbach array preferably comprises a cylindrical body. Within the cylindrical body, a stack of rings is placed, wherein each ring comprises magnets that are arranged in an annular fashion along the ring. Preferably, neighboring magnets have opposite orientations, meaning that a first magnet has a north pole facing radially towards the center of the ring and a south pole facing radially outwards of the ring and a neighboring second magnet has a south pole facing radially towards the center of the ring and a north pole facing radially outwards of the rings and so on. Due to this arrangement, the magnetic flux inside the ring may be increased. Further, the Halbach array comprises a helical shaped structure that is placed within the stack of rings. The helical shaped structure may be made of magnetic material, e.g. stainless steel. However, it is also possible that the helical shaped structure is made of a material that has a chaotic or structured arrangement of magnetic properties, e.g. nickel, iron, cobalt, or alloys comprising at least one of these or any other magnetic material. The helical shaped structure is configured to rotate within the stacked rings. During operation of the Halbach array, one or more liquid will be advanced by a rotating movement of helical shaped structure. Because of the increased magnetic flux within the stacked rings, the liquid experiences the influence of the magnetic field lines. When the liquid is advanced through the Halbach array, it will get softer when it streams through the magnetic field on the side of the increased magnetic flux. Thereby, chemical bonds of the liquid may be weakened.

According to the invention, the resonance frequency splitting chamber, the liquid-gas separator, the polarizer, and the outlet are fluidly connected, wherein the resonance frequency splitting chamber is fluidly connected to the liquid-gas separator, a first output of the two outputs of the liquid-gas separator is connected to the outlet of the system, a second output of the two outputs of the liquid-gas separator is connected to the polarizer, and the polarizer is connected back to the resonance frequency splitting chamber. This way, a loop is created between the resonance frequency splitting chamber, the liquid-gas separator, and the polarizer. In the resonance frequency splitting chamber, the one or more liquids are treated by splitting molecules of the one or more liquids into smaller parts - in particular splitting water molecules into hydrogen and oxygen - as has been described in detail above with respect to the apparatus according to the invention. When the one or more liquids treated by the resonance frequency splitting chamber reaches the liquid-gas separator, gaseous content is separated from the one or more liquids, for example hydrogen and oxygen gases are separated from water. The water will be provided to the polarizer for conditioning (e.g. by softening the liquid and weakening the chemical bonds of its molecules) and then fed back to the resonance frequency splitting chamber for further treatment, thereby forming a loop for the liquid content. Further, the gaseous content that is extracted at the liquid-gas separator is provided to the outlet and can be removed from the system, which allows the gaseous content to be used in other applications. For example, the gaseous content may be provided to an internal combustion engine.

In some preferred embodiments, the system may comprise a magnetic gas separator. The magnetic gas separator may be connected to the outlet of the system and may separate different gases by applying a magnetic field. For example, the magnetic gas separator may comprise a pulsed gradient magnetic field. When the magnetic gas separator is used in a system in which the liquid is water or a mixture of water and another substance, the magnetic gas separator may be configured for separating hydrogen and oxygen gases, thereby allowing the system to not only obtain hydrogen and oxygen gases from a liquid, but also to provide hydrogen gas and oxygen gas as separate products. This way, the system may provide purified hydrogen gas and/or purified oxygen gas.

The abovementioned need is also overcome by a method for treating one or more liquids according to the current invention. The method comprises receiving one or more liquids and treating the one or more liquids by resonance being introduced into the one or more liquids, thereby splitting molecules of the one or more liquids into smaller parts. The method may be performed by an apparatus treating one or more liquids according to the current invention or a system for treating one or more liquids according to the current invention that comprises a resonance frequency splitting chamber that corresponds to an apparatus according to the current invention as described above.

In some preferred embodiments, the method may comprise separating the smaller parts obtained from splitting the molecules of the one or more liquids by applying a magnetic field. The step of separating the smaller parts may be performed by a magnetic separator.

The following description and the annexed drawings set forth in detail certain illustrative aspects of the systems described above. These aspects are indicative, however, of but a few of the various ways in which the principles of various embodiments can be employed and the described embodiments are intended to include all such aspects and their equivalent.

In the drawings, like reference characters generally refer to the same parts throughout the different drawings. The drawings are not necessarily to scale, emphasis instead generally being placed upon illustrating the principles of the invention.

In the following description, various embodiments of the invention are described with reference to the following drawings, in which:
- FIG. 1: shows a flow diagram according to an embodiment of the invention;
- FIG. 2: shows an embodiment of a resonance frequency splitting chamber that comprises a single treatment unit;
- FIG. 3: shows another embodiment of a resonance frequency splitting chamber that comprises two treatment units;
- FIG. 4: shows liquid flow through the embodiment of the resonance frequency splitting chamber according to figure 3;
- FIG. 5: shows examples of a Halbach array according to embodiments of the invention; and
- FIG. 6: shows an embodiment example of a magnetic separator according to an embodiment of the invention.

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

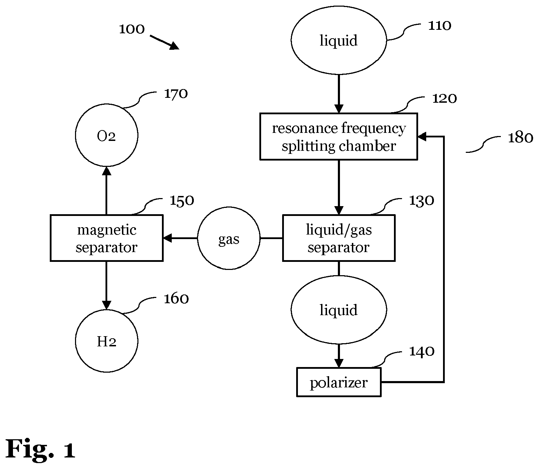

Figure 1 shows a flow diagram according to an embodiment of the invention. In figure 1, the flow diagram according to an embodiment of the invention is generally shown at 100.

At 110, one or more liquids (in the following referred to simply as "the liquid") are provided to a system for treating one or more liquids. The liquids may include water or a mixture of water and another liquid or substance. In some preferred examples, the substance may be an alcohol, a hydrocarbon fuel, or an additive.

A resonance frequency splitting chamber 120 receives the liquid and treats the liquid by splitting molecules of the liquid into smaller parts. In preferred examples, water molecules H₂O may be split into hydrogen H₂ and oxygen O₂. The products of the splitting may be incorporated in the liquid, for example gaseous hydrogen and gaseous oxygen may be dissolved in the liquid, preferably in form of an emulsion.

The liquid with the gaseous content is provided to the liquid-gas separator 130 wherein at least a portion of the gaseous content is separated from the liquid and provided to a magnetic separator 150, while the liquid is provided to the polarizer 140 for further processing.

While several forms of polarizers may be used, a Halbach array that is used in preferred examples is described in the following. This does, however, not limit the scope of the disclosure. In case an Halbach array is acting as polarizer 140, the liquid is conditioned by treating it with a magnetic field. By this treatment, the liquid may become softer and the chemical bonds of the liquid molecules may be weakened. The conditioned liquid is then fed back to the resonance frequency splitting chamber 120, where it will be mixed with unconditioned liquid received from 110. Thereby, a liquid loop is provided, in which the liquid will flow in a loop between the resonance frequency splitting chamber 120, the liquid-gas separator 130 and the Halbach array, gaseous content dissolved in the liquid will be extracted from the liquid at the liquid-gas separator 130.

In some embodiments of the system according to the invention, the gaseous content as it is extracted from the liquid at the liquid-gas separator will be the final product of the treatment and will not be further processed. However, in some other embodiments of the system according to the invention, the extracted gaseous content will be further processed.

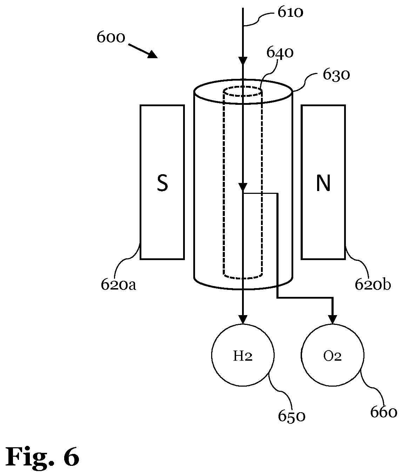

In the embodiment example 100 depicted in figure 1, the extracted gaseous content is provided to a magnetic separator 150. At the magnetic separator 150, different gases may be separated by ease of magnetic field. Since the splitting of the liquid generally results in a mixture of extracted gases, separating the gases from one another may be necessary in case that purified gases shall be obtained. In the embodiment example 100 shown in figure 1, the extracted gas contains a mixture of at least hydrogen and oxygen. Since hydrogen molecules H₂ are diamagnetic (due to paired electrons) and oxygen molecules O₂ are paramagnetic (due to unpaired electrons), both gases will behave differently in a magnetic field. For example, if a magnetic gradient field is applied to a gas stream of a hydrogen and oxygen mixture, the hydrogen and the oxygen molecules will flow differently - for example, when a pulsed gradient magnetic field is applied perpendicular to the flow direction of the gas stream, the diamagnetic hydrogen molecules may only experience a small or no perpendicular force, the paramagnetic oxygen molecules may experience a perpendicular force that may extract the oxygen molecules from the gas stream, thereby separating oxygen and hydrogen from one another. This concept is illustrated in figure 6 in more detail.

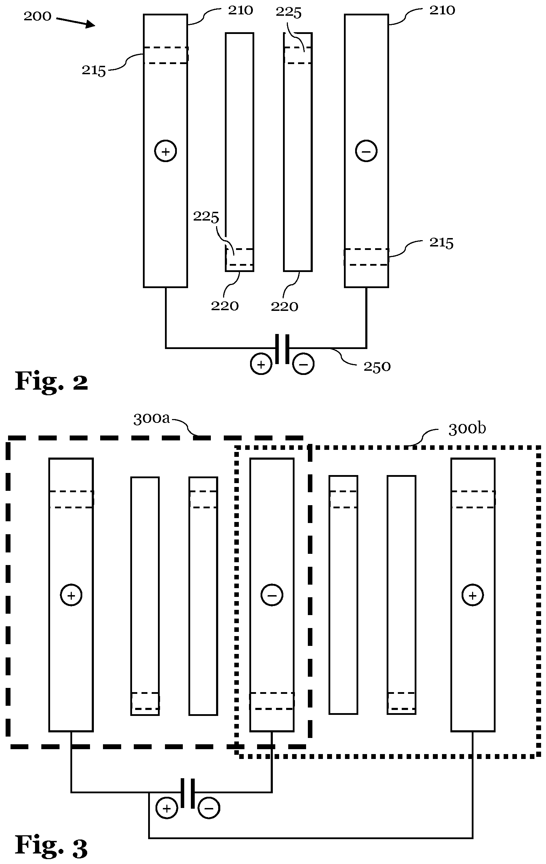

Figure 2 shows an embodiment of a resonance frequency splitting chamber as shown in figure 1, wherein the resonance frequency splitting chamber in the here shown embodiment example comprises a single treatment unit. The resonance frequency splitting chamber 200 depicted in figure 2 comprises two first plates 210 and two second plates 220. As has been described in detail above, a resonance frequency splitting chamber according to the invention comprises at least one second plate 220. For illustrative purposes, two second plates 220 are depicted in figure 2.

The two first plates 210 each comprise at least one hole 215 and the two second plates 220 each comprise at least one hole 225. Further, the two first plates 210 are connected to an electric current generator 250.

Figure 3 shows another embodiment of a resonance frequency splitting chamber that comprises two treatment units. The embodiment example depicted in figure 3 comprises two treatment units 300a and 300b, which each comprise a frame formed by dashed lines for illustrative purposes, wherein each of these two treatment units has the same structure as the single treatment unit illustrated in figure 2.

In figure 3, the two treatment units 300a and 300b are placed adjacent to one another. In other examples, more than two treatment units may be placed adjacent to one another, thereby forming a stack of treatment units with first and second plates arranged essentially parallel to one another. It can also be said that the two treatment units 300a and 300b are neighboring treatment units.

Further, both treatment units share a common first plate, namely the first plate that has negative charge in figure 3. In the general case of stacked treatment units each pair of neighboring treatment units may share one of their first plates. While it is not excluded from the scope of the disclosure that two first plates may be placed directly adjacent to one another at the positions where two treatment units are stacked together, using common first plates as is illustrated in figure 3 may be preferred because a smaller number of plates needs to be used.

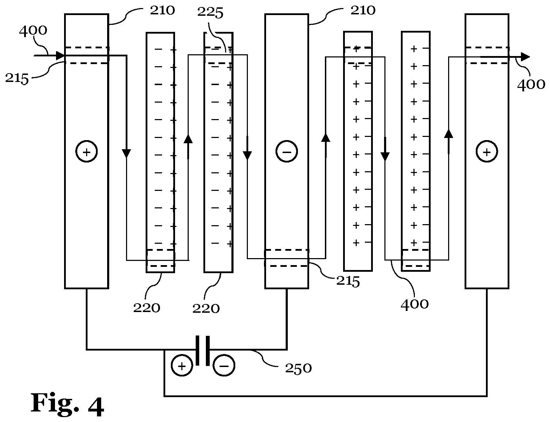

Figure 4 shows liquid flow through the embodiment of the resonance frequency splitting chamber according to figure 3. In figure 4, liquid flow is illustrated by arrows 400. The arrows 400 connect the holes 215 in the first plates 210 and the holes 225 in the second plates 220 with one another. Thereby, a continuous flow path is formed between the holes and clearances between the plates that are spaced apart from one another. In the embodiment example depicted in figure 4, the holes 215, 225 of neighboring plates are placed at non-overlapping positions, wherein the non-overlapping positions refer to a direction of view that is parallel to the direction in which the plates are stacked. For example in figure 4, the plates are stacked in a left-right direction. Accordingly, if an observer looks at the stack of plates from left to right, the observer will not see an overlap of the position of the holes 215, 225 of any two neighboring plates. Instead, the positions of the holes 215, 225 of the embodiment example depicted in figure 4 are alternating between the top portions and bottom portions of the plates, wherein "top" and "bottom" refers to the orientation of the sheet of paper. This way, the distance that the liquid has to cover between the holes of two adjacent plates is increased compared to the case in which the positions of the holes would overlap, which would mean that the flow path would essentially be a left-to-right flow considering the aforementioned directions in figure 4.

Because the pulsating electric current is applied to the first plates 210, the liquid will be polarized when it flows along the flow path 400 and is in contact with the first plate 210. The polarization of the liquid will also cause a polarization of the second plates 220, which is illustrated via the "+" and "-" placed across the second plates 220 in figure 4. This polarization may be increased in case that the electrical field caused by the first plates 210 is large enough that the second plates 220 experience it as well. When the liquid now flows along the flow path through the stack of plates 210, 220, the polarization of the liquid will be increased over the covered distance.

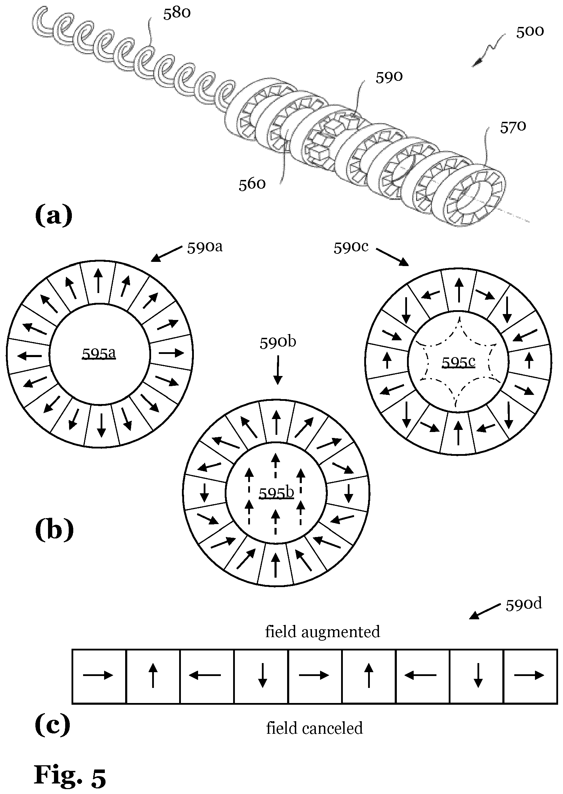

Figure 5 shows examples of a Halbach array that may be used as polarizer in the systems according to the invention, e.g. system 100 illustrated in figure 1. Figure 5 (a) is an explosion drawing of a Halbach array according to an embodiment of the invention. A Halbach array comprises a specific arrangement of permanent magnets, which causes increased magnetic flux on one side of the arrangement, along with highly decreased magnetic flux on the opposite side of the arrangement. Figure 5 illustrates one specific embodiment example of an Halbach array 500 in an explosion drawing.

The Halbach array 500 comprises a cylindrical body (not shown). Within the cylindrical body, a stack of rings 570 is placed, wherein each ring 570 comprises magnets 590 that are arranged in an annular fashion along the ring. Preferably, neighboring magnets a specified orientation. Some examples of orientations of magnets 590 are illustrated in figure 5 (b) as magnets 590a, 590b, 590c. The arrows represent the magnetic orientation (e.g. pointing from the north pole to the south pole of the magnet). Depending on the orientations of the magnets, the magnetic field within the center of the annularly arranged magnets may be augmented, i.e. increased, oriented in a particular manner or canceled. In the example of magnets 590a, the magnetic field in the center 595a is canceled. In the example of magnets 590b, the field lines of the magnetic field in the center 595b are essentially aligned in a parallel manner and in the example of magnets 590c, the field lines of the magnetic field in the center 595c are arranged in sections as illustrated by the dashed lines.

Further, the Halbach array 500 comprises a helical shaped structure 580 that is placed within the stack of rings 570. The helical shaped structure 580 is preferably made of magnetic material, e.g. stainless steel. The helical shaped structure 580 is configured to rotate within the stacked rings 570. An inner cylinder 560 may be placed within the stack of rings 570 in order to provide a sealed volume within the stack of rings 570, so that the fluid(s) that are passed through the Halbach array 500 do not leak.

A rotating movement of helical shaped structure 580 can be used to advance the fluid(s) through the Halbach array 500. Because of the increased magnetic flux within the stacked rings, the fluid(s) experience the influence of the magnetic field lines. When the Halbach array 500 is used as polarizer 140 in the system 100, it influences the fluid in a way that the fluid molecules (in particular in case of water molecules) will get softer when they stream through the magnetic field on the side of the increased magnetic flux. In case that hydrocarbon fuel flows through the Halbach array 500, the Halbach array 500 influences the hydrocarbon fuel in a way that certain chemical bonds of the hydrocarbon chains are weakened, which causes the hydrocarbon chains to dissolve into smaller sections of hydrocarbon chains. As the person skilled in the art will appreciate, burning of smaller hydrocarbon chains will result in reduced amount of exhaust gases, which is why the Halbach array can contribute to the reduction of carbon gas emissions from internal combustion engines.

Further, the person skilled in the art will appreciate that the Halbach arrays 500 illustrated in Figure 5 (a) and (b) represents only some examples of Halbach arrays and that other Halbach array configurations may be used without departing from the current invention. For example, a linear arrangement of magnets 590d as illustrated in Figure 5 (c) may be used in other example of Halbach arrays.

Figure 6 shows an embodiment example of a magnetic separator according to an embodiment of the invention, as shown in figure 1. The magnetic separator 600 comprises a pulsed gradient magnetic field that is illustrated as magnetic poles 620a, 620b. When a gas stream 610 that comprises different gases having different magnetic properties streams through the magnetic poles 620a, 620b, these different gases will be separated. In order to enhance the separation, the magnetic separator may comprise a geometric arrangement that forms pathways for the different gases. In the example depicted in figure 6, the geometric arrangement is formed by concentric cylinders 630, 630. The inner cylinder 640 may be formed by a mesh tube, thereby allowing gas to flow out of the tube in a radial direction. According to the invention, the magnetic separator 600 may separate oxygen molecules 660 from hydrogen molecules 650 since the diamagnetic hydrogen molecules 650 essentially stream through the magnetic separator in a linear manner, while the paramagnetic oxygen molecules 660 may experience a force perpendicular to the direction of the gas stream 610 that pushes the oxygen molecules 660 out of the inner cylinder 640.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the scope of the appended claims.

## Claims

1. An apparatus for treating one or more liquids by splitting molecules of the liquids into smaller parts, the apparatus comprising:
one or more treatment units (200, 300a, 300b), each treatment unit (200, 300a, 300b) comprising:
two first plates (210), which are arranged essentially parallel to each other, wherein each plate of the two first plates (210) comprises at least one hole (215) and wherein the two first plates (210) are configured to receive an electric current; and
at least one second plate (220), which is arranged between the two first plates (210), wherein each plate of the at least one second plate (220) comprises at least one hole (225);
wherein the holes (215) of the two first plates (210) and the at least one hole (225) of the at least one second plate (220) are fluidly connected.

2. The apparatus according to claim 1, wherein the two first plates (210) configured to receive a pulsating electric current.

3. The apparatus according to any of the aforementioned claims, wherein the at least one second plate (220) is configured to be polarized when an electric current is applied to the two first plates (210).

4. The apparatus according to any of the aforementioned claims, wherein the two first plates (210) of the one or more treatment units (200, 300a, 300b) are configured to be charged oppositely when the electric current is applied.

5. The apparatus according to any of claims 1 to 3, wherein the one or more treatment units (200, 300a, 300b) include two or more treatment units (200, 300a, 300b), wherein the treatment units (200, 300a, 300b) are arranged in a stacked manner and wherein the holes (215 , 225) in the plates of neighboring treatment units (200, 300a, 300b) are fluidly connected to one another.

6. The apparatus according to claim 5, wherein one of the two first plates (210) of a first treatment unit (200, 300a, 300b) represents one of the two first plates (210) of a second treatment unit (200, 300a, 300b) that is an adjacent neighbor of the first treatment unit (200, 300a, 300b) in the stack of two or more treatment units (200, 300a, 300b).

7. The apparatus according to claim 6, wherein a pair of two neighboring ones of the first plates (210) of the stacked treatment units (200, 300a, 300b) are configured to be charged oppositely when the electric current is applied.

8. The apparatus according to any of the aforementioned claims, wherein the first and second plates (220) of each treatment unit (200, 300a, 300b) are spaced apart from one another, thereby forming clearances between the plates and wherein the clearances and the holes (215, 225) in the plates form one or more flow paths.

9. The apparatus according to any of the aforementioned claims, wherein the treatment units (200, 300a, 300b) are configured for treating one or more liquids and wherein the one or more liquids include water or a mixture of water and at least one other liquid or substance.

10. A system for treating one or more liquids, comprising:
a resonance frequency splitting chamber (120), which corresponds to any of the apparatuses according to any of claims 1 to 7, which is configured for splitting molecules of one or more liquids into smaller parts;
a liquid-gas separator (130) comprising two outputs;
a polarizer (140); and
an outlet;
wherein the resonance frequency splitting chamber (120), the liquid-gas separator, the polarizer (140), and the outlet are fluidly connected, wherein:
the resonance frequency splitting chamber (120) is fluidly connected to the liquid-gas separator;
a first output of the two outputs of the liquid-gas separator is connected to the outlet;
a second output of the two outputs of the liquid-gas separator is connected to the polarizer (140); and
the polarizer (140) is connected to the resonance frequency splitting chamber (120).

11. The system according to claim 10, wherein one or more liquids include water or a mixture of water and at least one other liquid or substance and wherein the smaller parts obtained from splitting the molecules comprise at least hydrogen and oxygen.

12. The system according to claim 11, further comprising:
a magnetic separator (150) that is connected to the outlet, wherein the magnetic separator (150) comprises a pulsed gradient magnetic field and is configured for separating hydrogen and oxygen.

13. A method for treating one or more liquids, the method comprising:
receiving one or more liquids; and
treating the one or more liquids by resonance being introduced into the one or more liquids, thereby splitting molecules of the one or more liquids into smaller parts.

14. The method according to claim 13, further comprising:
separating the smaller parts obtained from splitting the molecules of the one or more liquids by applying a magnetic field.

15. The method according to any of claims 13 and 14, wherein the one or more liquids include water or a mixture of water and at least one other liquid or substance and the smaller parts obtained from splitting the molecules comprise at least hydrogen and oxygen.
